# EUROPEAN PATENT APPLICATION

(11) **EP 3 451 446 A1**
(43) Date of publication of application: **06.03.2019**
(21) Application number: 18162176.4
(22) Date of filing: 16.03.2018
(51) Int. Cl.: H01Q 1/24, H01Q 1/44, H01Q 1/38, H01Q 1/42, H01Q 9/06, H01Q 9/40

(54) **MOBILE DEVICE**

(30) Priority: 01.09.2017 TW 106130023
(71) Applicant: Princo Corp., Hsinchu 300 (TW)
(72) Inventor: Chiu, Pei-liang, 300 Hsinchu (TW)
(74) Representative: Patentanwälte Olbricht Buchhold Keulertz

(57) **Abstract**

A mobile device includes a case having an accommodating space, a system circuit board disposed in the accommodating space, a screen disposed on an inner surface of the case, a transparent antenna disposed at a non-display area on the inner surface of the case facing the screen, and a transmission line electrically connected to the transparent antenna. The transparent antenna and the transmission line are integrated into one piece.

## Description

### TECHNICAL FIELD OF THE INVENTION

The present disclosure relates to an antenna field, and more particularly to a mobile device including a transparent antenna.

### BACKGROUND OF THE INVENTION

Currently, when an antenna of a mobile device is applied to a metal case, it is necessary to cut the metal case to prevent electromagnetic signals from being affected by the metal case. However, cutting the metal case affects integrity of the metal case.

Moreover, when a conventional antenna is applied to a light transparent case of a mobile device, a position of the antenna cannot be directly adhered to a lower end of an inner surface of the light transparent case. Furthermore, the antenna and a signal transmission line in the mobile device are made of different materials, so a junction of the antenna and the signal transmission line is obvious. As such, appearance of the mobile device is not good looking.

Consequently, there is a need to solve the above-mentioned problems in the prior art.

### SUMMARY OF THE INVENTION

An objective of the present disclosure is to provide a mobile device capable of solving the problems in the prior art.

The mobile device of the present disclosure includes a case having an accommodating space, wherein the case is made of a metal material or a light transparent material; a system circuit board disposed in the accommodating space; a screen disposed on an inner surface of the case; a transparent antenna disposed at a non-display area on the inner surface of the case; and a transmission line electrically connected to the transparent antenna, wherein the transparent antenna and the transmission line are integrated into one piece.

The mobile device of the present disclosure includes a case having an accommodating space, wherein the case is made of a metal material or a light transparent material; a system circuit board disposed in the accommodating space; a screen disposed on an inner surface of the case; a transparent antenna disposed on one surface opposite to the inner surface of the case facing the screen; and a transmission line electrically connected to the transparent antenna, wherein the transparent antenna and the transmission line are integrated into one piece.

In the mobile device of the present disclosure, since the transparent antenna and the transmission line are made of the same material, the junction of the transparent antenna and the transmission line is transparent. As such, the appearance of the mobile device is good looking.

### BRIEF DESCRIPTION OF THE DRAWINGS

FIG. 1 illustrates a mobile device in accordance with an embodiment of the present disclosure.
FIG. 2 illustrates a transparent antenna and a transmission line in accordance with an embodiment of the present disclosure.
FIG. 3 illustrates a structural diagram of the transparent antenna and the transmission line in accordance with an embodiment of the present disclosure.
FIG. 4 illustrates that the transparent antenna and the transmission line are connected to a connector.
FIG. 5 illustrates a structural diagram of the transparent antenna and the transmission line in accordance with another embodiment of the present disclosure.
FIG. 6 illustrates the transparent antenna and an optical clear adhesive.
FIG. 7 illustrates a mobile device in accordance with another embodiment of the present disclosure.

### DETAILED DESCRIPTION OF THE INVENTION

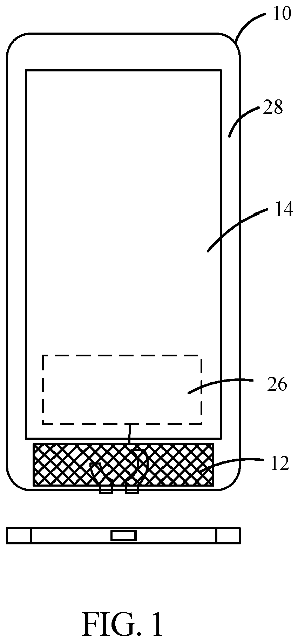

Please refer to FIG. 1. FIG. 1 illustrates a mobile device in accordance with an embodiment of the present disclosure.

The mobile device includes a case 10, a transparent antenna 12, a screen 14, and a system circuit board 26.

The case 10 has an accommodating space 28. The case 10 is made of a metal material or a light transparent material. The screen 14 is disposed on an inner surface of the case 10. The transparent antenna 12 is disposed on the inner surface of the case 10 facing the screen 14. In detail, a disposing area of the transparent antenna 12 is different from a disposing area of the screen 14. That is, the transparent antenna is disposed at a non-display area on the inner surface of the case 10 (the mobile device).

The system circuit board 26 is disposed in the accommodating space 28. Circuits in the mobile device are integrated on the system circuit board 26. The transparent antenna 12 can wirelessly communicate with the system circuit board 26. That is, the transparent antenna 12 can transmit and/or receive wireless signals. For example, the wireless signals may be but limited to third generation (3G) signals or fourth generation (4G) signals. The transparent antenna 12 has a high light transmittance. When the transparent antenna 12 is formed on the inner surface of the case 10, a structure formed by the case 10 and the transparent antenna 12 still has a light transmittance greater than 50%. Alternatively, in another embodiment, the light transmittance of the transparent antenna 12 is greater than 50%. The transparent antenna 12, for example, may be a monopole antenna or a dipole antenna.

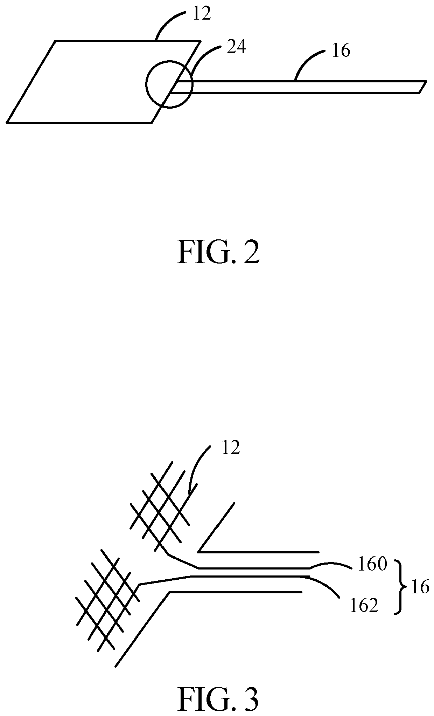

Please refer to FIG. 2 and FIG. 3. FIG. 2 illustrates the transparent antenna 12 and a transmission line in accordance with an embodiment of the present disclosure. FIG. 3 illustrates a structural diagram of the transparent antenna 12 and the transmission line 16 in accordance with an embodiment of the present disclosure.

The mobile device further includes the transmission line 16. The transmission line 16 is electrically connected to the transparent antenna 12. A feature of the present disclosure is that the transparent antenna 12 and the transmission line 16 are integrated into one piece. That is, the transparent antenna 12 and the transmission line 16 are made of the same material. Since the transparent antenna 12 and the transmission line 16 are made of the same material, a junction of the transparent antenna 12 and the transmission line 16 is transparent. As such, appearance of the mobile device is good looking.

In the present embodiment, the transparent antenna 12 is a polyethylene terephthalate film (PET film). The transmission line 16 is a co-planar transmission line. The transmission line 16 includes a signal line 160 and a ground line 162.

The transparent antenna 12 may be a conductive film formed in a mesh shape. In practice, the mesh shape is formed by a plurality of ultra-fine metal lines. Accordingly, a user does not see the metal lines in the mesh shape. The metal lines which the user sees are approximately transparent.

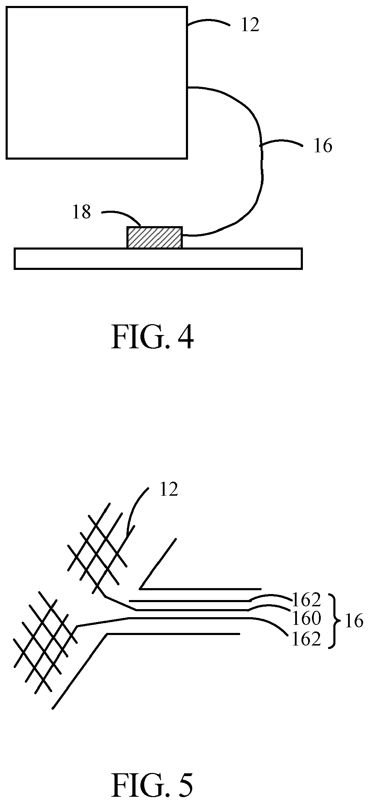

Please refer to FIG. 4. FIG. 4 illustrates that the transparent antenna 12 and the transmission line 16 are connected to a connector 18.

The mobile device further includes the connector 18 electrically connected to the transmission line 16. The connector 18 is configured to transmit signals to the transparent antenna 12 and/or receive signals from the transparent antenna 12. In detail, the connector 18 is configured to transmit electrical signals inside the mobile device (electrical signals of the system circuit board 26 in FIG. 1) to the transparent antenna 12, and/or transmit received wireless signals to corresponding circuits inside the mobile device (the system circuit board 26 in FIG. 1).

Please refer to FIG. 5. FIG. 5 illustrates a structural diagram of the transparent antenna 12 and the transmission line 16 in accordance with another embodiment of the present disclosure.

In the present embodiment, the transparent antenna 12 is a polyethylene terephthalate film (PET film). The transmission line 16 is a co-planar transmission line. The transmission line 16 includes a signal line 160 and two ground lines.

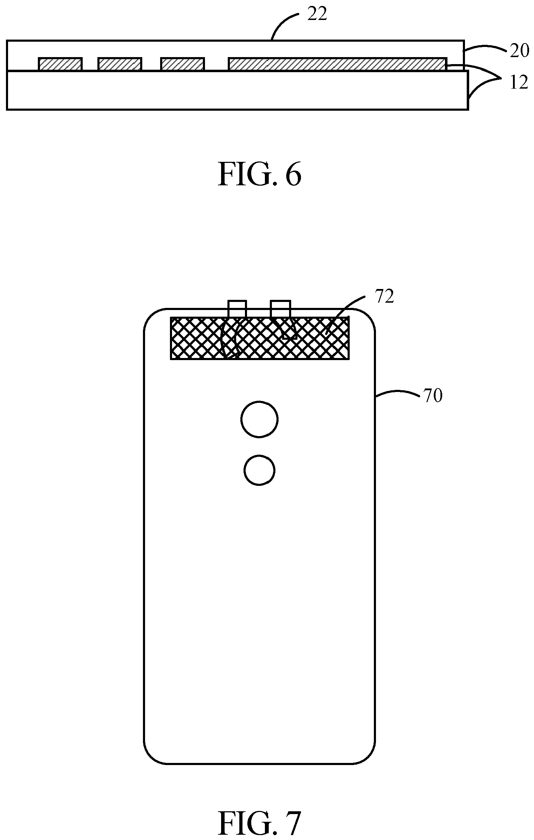

Please refer to FIG. 6. FIG. 6 illustrates the transparent antenna 12 and an optical clear adhesive (OCA) 20.

The mobile device further includes the optical clear adhesive 20. The transparent antenna 12 is adhered to the non-display area on the inner surface of the case 10 (in FIG. 1) via one surface 22 of the optical clear adhesive 20.

Please refer to FIG. 7. FIG. 7 illustrates a mobile device in accordance with another embodiment of the present disclosure.

The mobile device includes a case 70, a transparent antenna 72, a screen 14 (in FIG. 1), and a system circuit board 26 (in FIG. 1).

The transparent antenna 72 is disposed on one surface opposite to an inner surface of the case 70 facing the screen 14. That is, the transparent antenna 72 is disposed beneath the screen 14. In detail, the transparent antenna 72 is disposed at a non-display area on the one surface opposite to the inner surface facing the screen 14.

It is noted that detailed descriptions of the transparent antenna 72 in the mobile device of the present embodiment can be referred to the above related descriptions of FIG. 2 to FIG. 6 and are not repeated herein.

In the mobile device of the present disclosure, since the transparent antenna and the transmission line are made of the same material, the junction of the transparent antenna and the transmission line is transparent. As such, the appearance of the mobile device is good looking.

While the preferred embodiments of the present disclosure have been illustrated and described in detail, various modifications and alterations can be made by persons skilled in this art. The embodiment of the present disclosure is therefore described in an illustrative but not restrictive sense. It is intended that the present disclosure should not be limited to the particular forms as illustrated, and that all modifications and alterations which maintain the realm of the present disclosure are within the scope as defined in the appended claims.

## Claims

1. A mobile device, comprising:
a case (10) having an accommodating space (28), wherein the case (10) is made of a metal material or a light transparent material;
a system circuit board (26) disposed in the accommodating space (28);
a screen (14) disposed on an inner surface of the case (10);
a transparent antenna (12) disposed at a non-display area on the inner surface of the case (10); and
a transmission line (16) electrically connected to the transparent antenna (12),
wherein the transparent antenna (12) and the transmission line (16) are integrated into one piece.

2. The mobile device according to claim 1, wherein the transparent antenna (12) is a monopole antenna or a dipole antenna.

3. The mobile device according to claim 1, wherein the transmission line (16) is a co-planar transmission line.

4. The mobile device according to claim 1, further comprising a connector (18) electrically connected to the transmission line (16), and the connector (18) configured to transmit signals to the transparent antenna (12) and receive signals from the transparent antenna (12).

5. A mobile device, comprising:
a case (70) having an accommodating space, wherein the case (70) is made of a metal material or a light transparent material;
a system circuit board (26) disposed in the accommodating space;
a screen (14) disposed on an inner surface of the case (70);
a transparent antenna (72) disposed on one surface opposite to the inner surface of the case (70) facing the screen (14); and
a transmission line (16) electrically connected to the transparent antenna (72),
wherein the transparent antenna (72) and the transmission line (16) are integrated into one piece.

6. The mobile device according to claim 5, wherein the transparent antenna (72) is disposed at a non-display area on the one surface opposite to the inner surface facing the screen (14).

7. The mobile device according to claim 5, wherein the transparent antenna (72) is a monopole antenna or a dipole antenna.

8. The mobile device according to claim 5, wherein the transmission line (16) is a co-planar transmission line.

9. The mobile device according to claim 5, further comprising a connector (18) electrically connected to the transmission line (16), and the connector (18) configured to transmit signals to the transparent antenna (72) and receive signals from the transparent antenna (72).
